(19)

Europäisches Patentamt

European Patent Office

Office européen des brevets

(11) **EP 3 800 828 B1**

(12) **EUROPEAN PATENT SPECIFICATION**

(45) Date of publication and mention of the grant of the patent:
**25.12.2024 Bulletin 2024/52**

(21) Application number: **20210415.4**

(22) Date of filing: **02.07.2015**

(51) International Patent Classification (IPC):
*H04L 9/32* (2006.01)    *H04R 25/00* (2006.01)
*H04L 9/08* (2006.01)

(52) Cooperative Patent Classification (CPC):
**H04L 9/3263; H04L 9/0866; H04R 25/70;**
H04R 25/554; H04R 2225/55

(54) **CLIENT DEVICE WITH CERTIFICATE AND RELATED METHOD**

CLIENT-VORRICHTUNG MIT ZERTIFIKAT UND ZUGEHÖRIGES VERFAHREN

DISPOSITIF CLIENT AVEC CERTIFICAT ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.04.2021 Bulletin 2021/14**

(62) Document number(s) of the earlier application(s) in accordance with Art. 76 EPC:
**19153306.6 / 3 493 464**
**15175139.3 / 3 113 407**

(73) Proprietor: **GN Hearing A/S**
**2750 Ballerup (DK)**

(72) Inventors:
• **PEDERSEN, Brian Dam**
 **DK-2750 Ballerup (DK)**

• **VENDELBO, Allan Munk**
 **DK-2750 Ballerup (DK)**

(74) Representative: **GN Store Nord A/S**
**Lautrupbjerg 7**
**2750 Ballerup (DK)**

(56) References cited:
US-A- 5 757 920        US-A1- 2002 169 717
US-A1- 2014 211 973

• LEICHER A ET AL: "Implementation of a Trusted Ticket System", vol. 297, 1 January 2009 (2009-01-01), pages 1 - 12, XP007918097, Retrieved from the Internet <URL:http://sit.sit.fraunhofer.de/smv/publications/download/TC_based_ticket_systems_IFIP_SEC_09_cam_ready.pdf>

## Description

The present disclosure relates to a client device for hearing device communication and related method. In particular, a method of operating a client device for hearing device communication is disclosed.

## BACKGROUND

Functionalities of a hearing device become increasingly advanced. Wireless communication between a hearing device and external devices, such as hearing device fitting apparatus, tablets, smart phones and remote controllers, has evolved. A wireless communication interface of a hearing device uses an open standard-based interface. However, this poses many challenges in terms of security. A hearing device may assume any incoming data as legitimate, and may allow memory to be written or changed by an unauthorized party. Any such attacks may result in a malfunction of the hearing aid, or a battery exhaustion attack. Leicher - Implementation of a Trusted Ticket System, XP007918097 relates to a trusted platform module, TPM that is implemented with Kerberos and describes a trusted ticket system built on a client's hardware TPM. US 2014/211973 A1 relates to presence devices which are able to connect to a hearing instrument via the short range wireless protocol employed by the hearing instrument which may have a high degree of confidence that the wearer is nearby. Location based service providers and applications may utilize the presence information communicated via the presence device to offer unique location based services to hearing instrument wearers.

## SUMMARY

There is a need for client device and method providing improved security for hearing device communication. Further, there is a need for devices and methods reducing the risk of a hearing aid and hearing aid function being compromised by a third party.

Disclosed is a client device for hearing device communication. The client device comprises a processing unit, a memory unit and an interface. The memory unit has a client device key, such as at least one client device key, and/or a client device certificate stored thereon. The processing unit is configured to receive a connection response, e.g. comprising a hearing device identifier, via the interface; generate one or more keys, e.g. including a certificate key, based on the hearing device identifier and/or the client device key; obtain an authentication message based on the certificate key and/or the client device certificate. To obtain the authentication message optionally comprises to generate and/or obtain an encrypted client device certificate by encrypting the client device certificate, e.g. with the certificate key, and optionally to include the encrypted client device certificate in the authentication message. The processing unit is configured to transmit the authentication message via the interface.

Further disclosed is a method of operating a client device for hearing device communication, the client device comprising a memory unit having a client device key, such as at least one client device key, and/or a client device certificate stored thereon. The method comprises receiving a connection response, e.g. comprising a hearing device identifier via the interface; generating one or more keys, e.g. including a certificate key, based on the hearing device identifier and/or the client device key; and obtaining an authentication message based on the certificate key and/or the client device certificate. Obtaining the authentication message optionally comprises generating an encrypted client device certificate, e.g. by encrypting the client device certificate with the certificate key, and optionally including the encrypted client device certificate in the authentication message. The method comprises transmitting the authentication message via the interface.

Advantageously, the method and hearing device enables the hearing device manufacturer to control client device access to the hearing device and/or enable version control in client device access.

The method and apparatus as disclosed provide a scalable security architecture for hearing device systems with improved security. The disclosed client device and method support a hearing device in combatting attacks such as unauthorized access or control of a hearing device, while still allowing access to legitimate parties such as the client device, for e.g. fitting purposes, update purposes, maintenance purposes. The client device and method allow the hearing device to open a session only with authenticated parties, such as an authenticated fitting device, an authenticated accessory device, an authenticated external device and/or an authenticated server. This may provide robustness against impersonation and masquerading attacks, battery exhaustion attacks, eavesdropping, man-in-the-middle attacks and/or replay attacks. Further, the need for updating and/or exchange of keys in case a key has been compromised at a client device has been reduced and simplified.

## BRIEF DESCRIPTION OF THE DRAWINGS

The above and other features and advantages will become readily apparent to those skilled in the art by the following detailed description of exemplary embodiments thereof with reference to the attached drawings, in which:

Fig. 1    schematically illustrates an exemplary architecture according to this disclosure,

Fig. 2    schematically illustrates an exemplary client device,

Fig. 3    schematically illustrates an exemplary client device certificate

Fig. 4    schematically illustrates an exemplary client device certificate,

Fig. 5    schematically illustrates an exemplary signalling diagram,

Fig. 6    schematically illustrates an exemplary signalling diagram,

Fig. 7    schematically illustrates an exemplary signalling diagram,

Fig. 8    schematically illustrates a flowchart of an exemplary method, and

Fig. 9    schematically illustrates an exemplary signalling diagram.

DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described. Throughout, the same reference numerals are used for identical or corresponding parts.

The present disclosure relates to improved security in hearing device communication. - Namely, the client device disclosed herein enables hearing device communication that is robust against security threats, vulnerabilities and attacks by implementing appropriate safeguards and countermeasures, such as security mechanisms, to protect against threats and attacks. The present disclosure relates to hearing device communication that is robust against replay attacks, unauthorized access, battery exhaustion attacks, and man-in-the-middle attacks.

As used herein, the term "hearing device" refers to a device configured to assist a user in hearing a sound, such as a hearing instrument, a hearing aid device, a headset, a pair of headphones, etc.

As used herein, the term "certificate" refers to a data structure that enables verification of its origin and content, such as verifying the legitimacy and/or authenticity of its origin and content. The certificate is configured to provide a content that is associated to a holder of the certificate by an issuer of the certificate. The certificate comprises a digital signature, so that a recipient of the certificate is able to verify or authenticate the certificate content and origin. The certificate may comprise one or more identifiers and/or keying material, such as one or more cryptographic keys (e.g. a hearing device key) enabling secure communication in a hearing device system. The certificate permits thus to achieve authentication of origin and content, non-repudiation, and/or integrity protection. The certificate may further comprise a validity period, one or more algorithm parameters, and/or an issuer. A certificate may comprise a digital certificate, a public key certificate, an attribute certificate, and/or an authorization certificate. Examples of certificates are X.509 certificates, and Secure/Multipurpose Internet Mail Extensions, S/MIME, certificates, and/or Transport Layer Security, TLS, certificates.

As used herein, the term "key" refers to a cryptographic key, i.e. a piece of data, (e.g. a string, a parameter) that determines a functional output of a cryptographic algorithm. For example, during encryption, the key allows a transformation of a plaintext into a cipher-text and vice versa during decryption. The key may also be used to verify a digital signature and/or a message authentication code, MAC. A key is so called a symmetric key when the same key is used for both encryption and decryption. In asymmetric cryptography or public key cryptography, a keying material is a key pair, so called a private-public key pair comprising a public key and a private key. In an asymmetric or public key cryptosystem (such as Rivest Shamir Adelman, RSA, cryptosystem), the public key is used for encryption and/or signature verification while the private key is used for decryption and/or signature generation. The hearing device key may be keying material allowing derivation of one or more symmetric keys, such as a session key and/or a certificate key for hearing device communication. The hearing device key may be stored in a memory unit of the hearing device, e.g. during manufacture. The hearing device key may comprise keying material that is used to derive a symmetric key. The hearing device key comprises for example an Advanced Encryption Standard, AES, key , such as an AES-128 bits key.

As used herein the term "identifier" refers to a piece of data that is used for identifying, such as for categorizing, and/or uniquely identifying. The identifier may be in a form of a word, a number, a letter, a symbol, a list, an array or any combination thereof. For example, the identifier as a number may be in the form of an integer, such as unsigned integer, uint, with a length of e.g. 8 bits, 16 bits, 32 bits, etc., such as an array of unsigned integers.

A client device for hearing device communication with a hearing device is disclosed. The term "client device" as used herein refers to a device that is able to communicate with the hearing device. The client device may refer to a computing device acting as a client. The client device may comprise a fitting device, a handheld device, a relay, a tablet, a personal computer, a mobile phone, an application running on a personal computer or tablet, or mobile phone and/or USB dongle plugged into a personal computer. The client device may be attributed a client device type indicated by a client device type identifier, the client device type e.g. corresponding to a model, category or type of client devices, such as a fitting type, e.g. a tablet product model, category or type for fitting the hearing device, a USB dongle product model, category or type for fitting the hearing device. The client device may be configured to control operation of the hearing device, either by sending fitting data, hearing device operating parameters, and/or firmware data.

The client device comprises a memory unit and an interface respectively connected to the processing unit. The memory unit may include removable and non-removable data storage units including, but not limited to, Read Only Memory (ROM), Random Access Memory (RAM), etc. The memory unit has a client device certificate stored thereon. The memory unit may have the client device certificate and/or the client device key stored at a memory address of the memory unit, and/or in memory cells of the memory unit, such as in designated memory cells and/or at designated addresses. The interface may comprise a wireless transceiver, e.g. configured for wireless communication at frequencies in the range from 2.4 to 2.5 GHz. The interface may comprise one or more connectors for connection to another device, e.g. a fitting device. A connector may be a standard connector, such as a USB connector (USB 2.0 standard-A, USB 2.0 standard-B, Micro-A USB, Micro-B USB, Mini-A USB, Mini-B USB or others). A connector may be a proprietary connector used by a manufacturer of personal electronic devices. The interface may be configured for communication, such as wireless communication, with a hearing device comprising a wireless transceiver.

The client device certificate may comprise a certificate type identifer. The certificate type identifier may indicate a type of the certificate amongst a variety of certificate types, such as a hearing device family certificate type, a hearing device certificate type, a firmware certificate type, a research and development certificate type, and/or a client device certificate type. The certificate type identifier may be used by a hearing device and/or the client device to identify what type of certificate a hearing device receives, stores, authenticates and/or retrieves. The client device certificate may comprise a version identifier indicative of a data format version of the certificate. A hearing device may use the certificate type identifier and/or the version identifier of the client device certificate to determine what type of data the client device certificate comprises and/or what type of data is comprised in a field of the client device certificate. For example, a hearing device may determine based on the certificate type identifier and/or version identifier what field of the client device certificate comprises a digital signature and/or which public key is needed to verify the digital signature of the client device certificate. It may be envisaged that there is a one-to-one mapping between the certificate type identifier and the public-private key pair.

The client device certificate may comprise a signing device identifier. The signing device identifier refers to a unique identifier identifying the device that has signed the client device certificate, such as a manufacturing device, e.g. an integrated circuit card, a smart card, a hardware security module. The signing device identifier may for example comprise a medium access control, MAC, address of the signing device and/or a serial number of the signing device. The signing device identifier may allow for example a hearing device to determine whether the signing device is e.g. black-listed or not, and thus to reject certificates signed by a signing device that has been black-listed, e.g. due to theft or other corruption.

The client device certificate may comprise a client device type identifier. The client device type identifier may indicate a type of the client device amongst a variety of client device types, such as a model, category or type of client devices, such as a fitting type, e.g. a tablet product model, category or type for fitting the hearing device, a USB dongle product model, category or type for fitting the hearing device. The client device type identifier may be used by a hearing device to identify what type of client device the hearing device communicates with. The client device type identifier may enable a hearing device to select a set of keys from a plurality of key sets in the hearing device. Respective key sets in the hearing device may be used by respective different types of client devices.

The client device certificate may comprise a client device identifier. The client device identifier may be based on one or more hardware identifiers of one or more hardware components/modules of the client device.

The client device certificate may comprise a client device key identifier. The client device key identifier is indicative of the client device key.

The client device certificate may comprise one or more hardware identifiers, for example a first hardware identifier and/or a second hardware identifier. A hardware identifier may identify a piece of hardware comprised in the client device, such as a radio chip comprised in the client device or a digital signal processor of the client device. The hardware identifier(s) may be stored in a register of the piece of hardware comprised in the client device during manufacturing of the piece of hardware. The hardware identifier may comprise a serial number of the hardware, a chip identifier, or any combination thereof. The client device receiving or retrieving from the memory unit the client device certificate comprising the hardware identifier may verify the client device certificate by comparing its stored hardware identifier and the corresponding hardware identifier comprised in the client device certificate. Such verification may be performed upon retrieval of the client device certificate from the memory unit, such as at boot or power-on of the client device. The client device certificate may comprise one or more bluetooth addresses, e.g. assigned by the manufacturer during manufacture.

The client device certificate may comprise a user identifier, e.g. in the form of a user name. A client device certificate with a user identifier may facilitate the use of a generic device, such as a tablet computer, as a client device, e.g. by implementing a user verification/key generation/encryption at a remote server device, e.g. controlled by a hearing device manufacturer.

The client device certificate may comprise a digital signature. The digital signature enables a proof or verification of authenticity of the client device certificate, such as verification of the signer legitimacy. The digital signature is optionally generated by a manufacturing device using a client device family private key at manufacturing of the client device. The digital signature is verifiable by a hearing device and/or fitting device using a corresponding client device family public key. If the digital signature is not successfully verified using the alleged public key, a hearing device may disregard the client device certificate and/or abort normal operation. This may provide the advantage that the hearing device rejects a client device certificate that is tampered or received from unauthenticated parties. The communication with the hearing device may thus be robust against impersonation, modification and masquerading attacks.

The processing unit is configured to receive a connection response comprising a hearing device identifier via the interface. The connection response may be generated by and/or sent from a hearing device. The processing unit is configured to generate one or more keys, e.g. based on the hearing device identifier and/or the client device key. To generate one or more keys may comprise to generate a common secret based on the client device key. To generate one or more keys may comprise to generate a hearing device key based on the hearing device identifier and/or the client device key, e.g. including to perform a hash function. For example, the hearing device key, HD_KEY, may be given as:

$$HD\_KEY = hash(HD\_ID, CD\_KEY),$$

where hash is a hash function, HD_ID is the hearing device identifier and CD_KEY is the client device key.

The processing unit may be configured to obtain a session identifier, e.g. by receiving the session identifier from the hearing device. The connection response may comprise the session identifier.

To generate one or more keys may comprise to generate a common secret. The common secret may be based on the hearing device key and/or the session identifier. The common secret may be based on the hearing device identifier. The hearing device key and/or the client device key may be used as a common secret. For example, the common secret, CS, may be given as:

$$CS = hash(HD\_KEY, S\_ID),$$

where hash is a hash function, HD_KEY is the hearing device key and S_ID is the session identifier.

By generating and/or using a common secret, a need for exchanging keys is avoided. Further, if the common secret is based on the hearing device identifier (client device key is different from hearing device key), the client device key cannot be derived from the hearing device key used by the hearing device. Thereby the risk of compromising the client device key is heavily reduced.

The one or more keys generated based on the hearing device identifier and/or the client device key may be based on the common secret.

The certificate key may be based on the common secret and/or a certificate value. The certificate value may be a predefined value or string, such as "certificate". The certificate key may be generated by performing a hash function on the common secret and/or the certificate value. For example, the certificate key, C_KEY, may be given as:

$$C\_KEY = hash(CS, C\_VAL),$$

where hash is a hash function, CS is the common secret and C_VAL is the certificate value.

To generate one or more keys may comprise to generate a session key. The session may be different from the certificate key. The session key may be based on the hearing device identifier. The session key may be based on the session identifier. The session key may be based on the client device key. The processing unit may be configured to transmit the session key to a fitting device. The client device, when configured to operate as a fitting device, may be configured to perform fitting communication with the hearing device based on the session key. The session key may be based on the common secret and/or a session value. The session value may be a predefined value or string, such as "session". The session key may be generated by performing a hash function on the common secret and/or the session value. For example, the session key, S_KEY, may be given as:

$$S\_KEY = hash(CS, S\_VAL),$$

where hash is a hash function, CS is the common secret and S_VAL is the session value. By generating a session key based on a session identifier and a common secret, session specific communication is enabled.

The processing unit is configured to obtain an authentication message based on the certificate key and/or the client device certificate. To obtain the authentication message may comprise to include the client device certificate in the authentication message.

The processing unit may be configured to include an authentication key identifier, e.g. indicative of the client device key in the authentication message. The authentication key identifier may be indicative of or match the client device key identifier of the client device certificate. An authentication message comprising an authentication key identifier indicative of the client device key enables a hearing device to select a correct hearing device key from a plurality of hearing device keys, e.g. in order to generate or select the common secret. Subsequently, the hearing device may generate the certificate key for decrypting the encrypted client device certificate in the hearing device.

The processing unit may be configured to include an authentication type identifier in the authentication message. The authentication type identifier may be indicative of or match the client device type identifier and/or the certificate type identifier of the client device certificate. An authentication message comprising an authentication type identifier may enable a hearing device to select a hearing device key from a selected set of hearing device keys when the hearing device comprises a plurality of hearing device key sets. In addition or alternatively, the hearing device may be configured to process the authentication message in different ways based on the authentication type identifer. Thus, a hearing device may be able to select an appropriate authentication message processing scheme.

The method comprises receiving a connection response, e.g. from a hearing device, via the interface. The connection response may comprise a hearing device identifier.

The method comprises generating and/or obtaining one or more keys, e.g. based on the hearing device identifier and/or the client device key. Generating one or more keys may comprise to generate a common secret based on the client device key. The one or more keys may comprise a certificate key.

The method comprises generating and/or obtaining an authentication message based on the certificate key and/or the client device certificate. Obtaining and/or generating the authentication message may comprise generating an encrypted client device certificate with the client device by encrypting the client device certificate with the certificate key and optionally including the encrypted client device certificate in the authentication message. Obtaining and/or generating the authentication message may comprise obtaining an encrypted client device certificate, e.g. from the memory unit and/or a server device. Obtaining an encrypted client device certificate may comprise transmitting a certificate request to a server device. In response, the server device generates and transmits a certificate response comprising the encrypted client device certificate (the client device certificate has been encrypted with certificate key). The client device receives the certificate response with the encrypted client device certificate and includes the encrypted client device certificate in the authentication message. Thus, obtaining an encrypted client device certificate may comprise receiving a certificate response comprising the encrypted client device certificate from a server device. Obtaining the authentication message may comprise including the client device certificate in the authentication message.

The method comprises transmitting the authentication message, e.g. to the hearing device, via the interface.

The method may comprise obtaining a session identifier, e.g. by receiving the session identifier from the hearing device. The connection response may comprise the session identifier. Generating one or more keys may comprise generating a hearing device key based on the hearing device identifier and the client device key. For example, the hearing device key, HD_KEY, may be given as:

$$HD\_KEY = hash(HD\_ID, CD\_KEY),$$

where hash is a hash function, HD_ID is the hearing device identifier and CD_KEY is the client device key.

Generating one or more keys may comprise generating a common secret. The common secret may be based on the hearing device key and/or the session identifier. The common secret may be based on the hearing device identifier. The hearing device key and/or the client device key may be used as a common secret. For example, the common secret, CS, may be given as:

$$CS = hash(HD\_KEY, S\_ID),$$

where hash is a hash function, HD_KEY is the hearing device key and S_ID is the session identifier. Generating one or more keys may comprise generating one or more keys based on the common secret.

6

In the method, the certificate key may be based on the common secret and/or a certificate value. The certificate value may be a predefined value or string, such as "certificate". Generating the certificate key may comprise performing a hash function on the common secret and/or the certificate value. For example, the certificate key, C_KEY, may be given as:

$$C\_KEY = hash(CS, C\_VAL),$$

where hash is a hash function, CS is the common secret and C_VAL is the certificate value.

Generating one or more keys may comprise generating a session key. The session key may be different from the certificate key. The session key may be based on the hearing device identifier. The session key may be based on the session identifier. The session key may be based on the client device key. The method may comprise transmitting the session key to a fitting device. The method may comprise performing fitting communication with the hearing device based on the session key.

In the method, the session key may be based on the common secret and/or a session value. The session value may be a predefined value or string, such as "session". Generating the session key may comprise performing a hash function on the common secret and/or the session value. For example, the session key, S_KEY, may be given as:

$$S\_KEY = hash(CS, S\_VAL),$$

where hash is a hash function, CS is the common secret and S_VAL is the session value. By generating a session key based on a session identifier and a common secret, session specific communication is enabled.

Communication with a hearing device based on a common secret unique for the hearing device (e.g. common secret is based on hearing device identifier and/or session identifier) provides hearing device-specific communication. Thereby other hearing devices/listeners are not able to process/understand/eavesdrop authentication messages intended for a specific hearing device.

In the method, generating the authentication message may comprise including an authentication key identifier in the authentication message. The authentication key identifier may be indicative of or match the client device key identifier of the client device certificate. An authentication message comprising an authentication key identifier indicative of the client device key enables a hearing device to select a correct hearing device key from a plurality of hearing device keys, e.g. in order to generate or select the common secret. Subsequently, the hearing device may generate the certificate key for decrypting the encrypted client device certificate in the hearing device, e.g. based on the selected hearing device key.

In the method, generating the authentication message may comprise including an authentication type identifier in the authentication message. The authentication type identifier may be indicative of or match the client device type identifier and/or the certificate type identifier of the client device certificate. An authentication message comprising an authentication type identifier may enable a hearing device to select a hearing device key from a selected set of hearing device keys when the hearing device comprises a plurality of hearing device key sets. In addition or alternatively, the hearing device may be configured to process the authentication message in different ways based on the authentication type identifer. Thus, a hearing device may be able to select an appropriate authentication message processing scheme based on the authentication type identifier. The authentication type identifier may be the client device type identifier of the client device certificate.

In an exemplary method or an exemplary client device, the common secret, CS, may be given as:

$$CS = hash(CD\_KEY, S\_ID),$$

where hash is a hash function, CD_KEY is the client device key and S_ID is the session identifier.

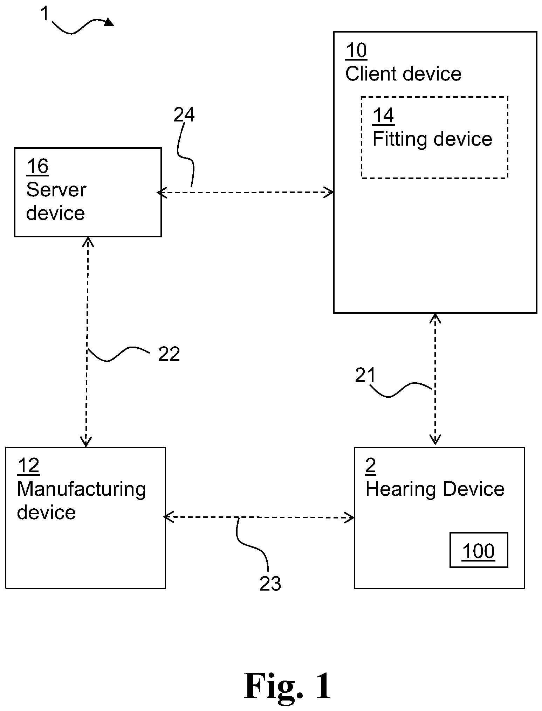

Fig. 1 schematically illustrates an exemplary architecture according to this disclosure with exemplary devices that may be used for manufacturing, maintenance, and/or operating a hearing device 2. Fig. 1 shows an exemplary system 1 and a hearing device 2. The system 1 may comprise one or more of a manufacturing device 12, a client device 10, and a server device 16 for manufacturing, maintenance, and/or operating the hearing device 2 in connection with hearing loss compensation (such as for fitting the hearing device and/or for updating a hearing device parameter).

The client device 10 may be configured to perform any acts of the method disclosed herein. The client device 10 may comprise processing elements (such as a processor and a memory) configured to perform any of the steps of the method disclosed herein. The hearing device 2 may be configured to compensate for hearing loss of a user of the hearing device 2. The hearing device 2 may be configured to communicate with the client device 10 using e.g. a communication link 21, such as a uni or bi-directional communication link. The communication link 21 may be a wired link and/or wireless communication link. The communication link 21 may be a single hop communication link or a multi-hop communication link. The wireless communication link may be carried over a short-range communication system, such as Bluetooth, Bluetooth low energy, IEEE 802.11, Zigbee. The hearing device 2 may be configured to receive a hearing device certificate from the manufacturing device 12 via communication link 23 and to store the hearing device certificate in a memory unit comprised in the hearing device 2. Alternatively or additionally, the manufacturing device 12 may store the hearing device certificate in the memory unit of the hearing device. The hearing device 2 may configured to connect to the client device 10 over a network. The client device 10 may permit remote fitting of the hearing device 2, where a dispenser connects to the hearing device via the client device 10. The client device 10 may comprise a computing device acting as a client, such as a fitting device 14 (e.g. a handheld device, a relay, a tablet, a personal computer, a mobile phone, and/or USB dongle plugged in a personal computer). The client device 10 may be configured to communicate with the server device 16 via a communication link 24, such as a bidirectional communication link. The communication link 24 may be a wired link and/or wireless communication link. The communication link 24 may comprise a network, such as the Internet. The client device 10 may be configured to communicate with the server device 16 for maintenance, and update purposes. The server device 16 may comprise a computing device configured to act as a server, i.e. to serve requests from the client device 10 and/or from the hearing device 2. The server device 16 may be controlled by the hearing device manufacturer. The server device 16 may be configured to communicate with the manufacturing device 12 via a communication link 22 for manufacturing maintenance, and/or operational purposes. The server device 16 and the manufacturing device 12 may be co-located and/or form one entity for manufacturing maintenance, and/or operational purposes of the hearing device 2.

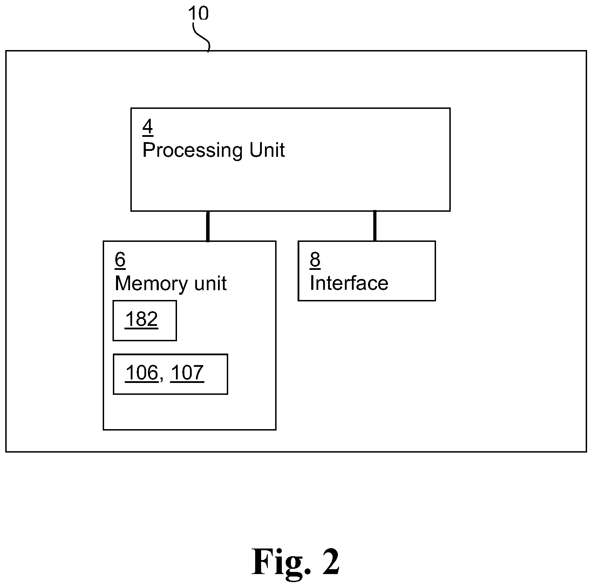

Fig. 2 schematically illustrates an exemplary client device 10. The client device 10 comprises a processing unit 4, a memory unit 6 and an interface 8. The interface 8 comprises a wireless transceiver, e.g. configured for wireless communication at frequencies in the range from 2.4 to 2.5 GHz. The interface 8 is configured for communication, such as wired and/or wireless communication, with a hearing device 2 and/or a server device. The memory unit 6 has a client device key 182 and a client device certificate 106, 107 stored thereon. The processing unit 4 is configured to receive a connection response comprising a hearing device identifier via the interface 8 and optionally to obtain a session identifier, e.g. as part of the connection response. A connection response including both the session identifier and the hearing device identifier reduces the risk of intervention from an attacker. Further, the number of connection responses from a hearing device is reduced, thereby reducing power consumption in the hearing device. The processing unit 4 is configured to generate one or more keys including a certificate key based on the hearing device identifier and/or the session identifier. The processing unit 4 is configured to generate one or more keys including a certificate key optionally based on the client device key. In the illustrated client device 10, the certificate key is generated by performing one or more hash functions. For example, the certificate key, C_KEY, may be given as:

$$C\_KEY = hash(CS, C\_VAL),$$

where hash is a hash function, CS is a common secret and C_VAL is a certificate value, e.g. a predefined value or string, such as "certificate". In the exemplary client device 10, the common secret, CS, is based on the hearing device key and the session identifier, e.g. given as:

$$CS = hash(HD\_KEY, S\_ID),$$

where hash is a hash function, HD_KEY is the hearing device key and S_ID is the session identifier. The hearing device key, HD_KEY, is based on the hearing device identifier and the client device key, e.g. given as

$$HD\_KEY = hash(HD\_ID, CD\_KEY),$$

where hash is a hash function, HD_ID is the hearing device identifier and CD_KEY is the client device key.

The certificate value may be a predefined value or string, such as "certificate". Generating the certificate key may comprise performing a hash function on the common secret and/or the certificate value. For example, the certificate key, C_KEY, may be given as:

$$C\_KEY = hash(CS, C\_VAL),$$

where hash is a hash function, CS is the common secret and C_VAL is the certificate value.

The processing unit 4 is configured to obtain an authentication message based on the certificate key and the client device certificate. To obtain the authentication message comprises to generate an encrypted client device certificate by encrypting the client device certificate with the certificate key and to include the encrypted client device certificate in the authentication message. To obtain the authentication message comprises to include an authentication key identifier and/or an authentication type identifier in the authentication message. The authentication key identifier is a copy of or at least indicative of the client device key identifier. The authentication type identifier is a copy of or at least indicative of the client device type identifier. The use of authentication identifier(s), such as authentication key identifier and/or authentication type identifier in the authentication message enables a hearing device to select the correct keying material for decrypting the encrypted client device certificate and/or check whether the authentication message is generated by an outdated client device. Further, the processing unit 4 is configured to transmit the authentication message to the hearing device via the interface 8.

In the exemplary processing unit 4, to generate one or more keys comprises to generate a session key based on the hearing device identifier, the session identifier and the client device key, and wherein the processing unit is optionally configured to transmit the session key to a fitting device. When the client device 10 comprises the fitting device, the session key is used for data communication with the hearing device.

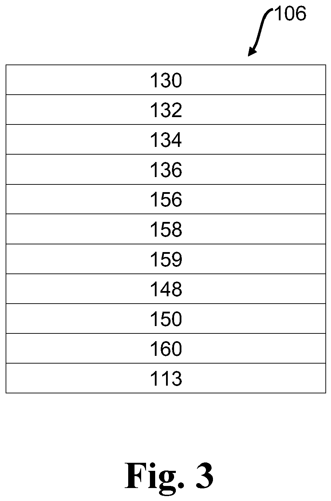

Fig. 3 schematically illustrates an exemplary client device certificate 106. The client device certificate 106 comprises a client device identifier 158 and a client device key identifier 159. The client device identifier 158 enables a hearing device to check if the client device has been black-listed. The client device key identifier 159 is indicative of the client device key (stored in the memory unit) used for generating the certificate key. The client device key identifier 159 of the client device certificate enables a hearing device to check the validity of the authentication key identifier of the authentication message.

The client device certificate 106 comprises a digital signature 113 and/or a MAC. The digital signature 113 enables a proof or verification of authenticity of the client device certificate 106, such as verification of the signer legitimacy (e.g. whether the signer is a legitimate manufacturing device). The digital signature 113 is generated during manufacture, e.g. using a device family private key during manufacturing of the client device. The client device 10 or the processing unit 4 may verify the digital signature 113 when receiving the client device certificate 100 comprising the digital signature 113. The digital signature 113 is verifiable by the client device 10 and/or a hearing device using a corresponding device family public key, e.g. selected according to the certificate type identifier. If the digital signature 113 is not successfully verified using the alleged public key, the client device 10 may abort normal operation.

The client device certificate 106 comprises a certificate type identifier 130. The certificate type identifier 130 indicates that the client device certificate 106 is a client device certificate, e.g. selected amongst a variety of certificate types, such as a hearing device family certificate type, a hearing device certificate type, a firmware certificate type, an access right certificate type, and a client device certificate type. The certificate type identifier 130 may be used to enable a hearing device 2 to identify what type of certificate it receives, stores, authenticates and/or retrieves. The client device certificate 106 may comprise a version identifier 132 which indicates a data format version of the client device certificate 106. A hearing device 2 may use the certificate type identifier 130 and/or the version identifier 132 to determine what type of data the client device certificate 106 comprises and/or what type of data is comprised in a field of the client device certificate 106. For example, a hearing device may determine based on the certificate type identifier 130 and/or version identifier 132 what field of the client device certificate comprises a digital signature 113, and which public key from a plurality of public keys is to be used to verify the digital signature 113. It may be envisaged that there is a one-to-one mapping between the certificate type identifier 130 and the public-private key pair used for generating the digital signature 113. The hearing device certificate 106 may comprise a length identifier 134 that indicates the length of the client device certificate 106.

The client device certificate 106 optionally comprises a signing device identifier 136. The signing device identifier 136 refers to a unique identifier identifying the device (such as an integrated circuit card, a smart card, a hardware security module comprised in or connected to a manufacturing device) that has signed the client device certificate 106. The signing device identifier 136 may for example comprise a medium access control, MAC, address of the signing device and/or a serial number. The signing device identifier 136 allows for example a hearing device 2 to determine whether the signing device of the client device certificate is e.g. black-listed or not, and thus to reject client device certificates 106 signed by a signing device that is black-listed.

The client device certificate 106 optionally comprises one or more hardware identifiers including a first hardware identifier 148 and/or a second hardware identifier 150. The hardware identifiers 148, 150 may respectively identify a piece of hardware comprised in the client device 10, such as a processing unit 4 or a radio chip comprised in the interface 4. The first hardware identifier 148 and/or the second hardware identifier 150 may also be stored in a register of the piece of hardware comprised in the client device 10 during manufacturing of the piece of hardware. The first hardware identifier 148 and/or the second hardware identifier 150 may comprise a serial number, a medium access control, MAC, address, a chip identifier, or any combination thereof. For example, the first hardware identifier 148 may provide a first client device specific value present in a register of a hardware module (e.g. the processing unit or the radio chip) of the client device 10 while the second hardware identifier may provide a second client device specific value present in a register of a hardware module of the client device 10.

The client device certificate 106 comprises a client device type identifier.156. The client device type identifier 156 indicates a type of the client device amongst a variety of client device types, such as a model, category or type of client devices, such as a fitting type, e.g. a tablet product model, category or type for fitting the hearing device, a USB dongle product model, category or type for fitting the hearing device. Optionally, the client device certificate 106 comprises a bluetooth addres 160 or at least part thereof, e.g. assigned by the manufacturer during manufacture. Addition of one or more fields and/or identifiers to the client device certificate is contemplated e.g. for a second generation client device certificate.

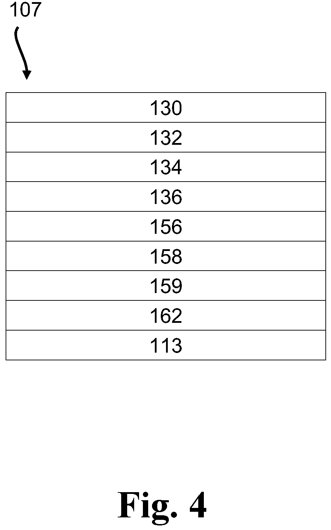

Fig. 4 schematically illustrates an exemplary client device certificate 107. The client device certificate 107 comprises certificate type identifier 130, optional version identifier 132, optional length identifier 134 and optional signing device identifier 136 as described above for client device certificate 106. The client device certificate 107 comprises client device type identifier 156, client device identifier 158, client device key identifier 159, and a user identifier 162. The user identifier 162 may be a in the form of a user name. Client device certificate 107 with a user identifier 162 may facilitate the use of a generic device, such as a tablet computer, as a client device, e.g. by implementing a user verification/key generation/certificate encryption/decryption at a remote server device, such as server device 16 controlled by hearing device manufacturer.

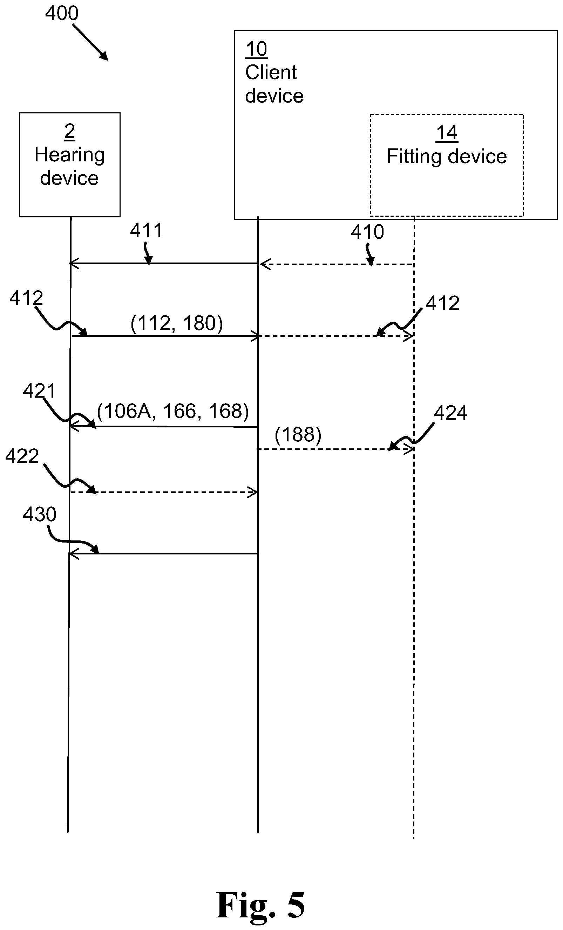

Fig. 5 schematically illustrates an exemplary signalling diagram 400 involving a hearing device 2 and a client device 10. The client device 10 may comprise a fitting device 14 or be connected to a fitting device 14. The client device 10 transmits a connection request or message 411 to hearing device 2. When the client device 10 comprises a fitting device 14, the fitting device 14 may generate a connection request 410, which is transmitted by the client device 10 as connection request 411. When the client device 10 is connected to a fitting device 14, the fitting device 14 may generate a connection request 410, which is forwarded by the client device 10 as connection request 411. The hearing device 2 returns a connection response 412 which is received by the client device 10. The client device 10 may forward the connection response 412 to the fitting device 14. The connection response 412 comprises a hearing device identifier 112 and/or a session identifier 180. The client device 10 generates one or more keys including a certificate key based on the hearing device identifier 112 and/or session identifier 180 received in the connection response and the client device key 182 stored in the memory unit. The client device 10 obtains and transmits authentication message 421 to the hearing device 2 based on the certificate key and the client device certificate 106. The authentication message 421 comprises encrypted client device certificate 106A. The encrypted client device certificate 106A is generated by encrypting the client device certificate 106 with the certificate key. The authentication message 421 comprises an authentication key identifier 166 indicative of the client device key 182 and/or authentication type identifier 168 indicative of the client device type identifier 156. Upon successful authentication of the authentication message 421 and/or verification, the client device 10 may receive an authentication response 422 from the hearing device 2. The client device 10 may forward the authentication response 422 to fitting device 14. The communication channel is now open and secure. The client device 10 or fitting device 14 via the client device 10 may send hearing device data 430 to the hearing device 2. Hearing device data 430 may comprise one or more of firmware, fitting data, and/or hearing device operating parameters. Fitting data may for example be data generated by a fitting device 14 used by a dispenser when a hearing device 2 is being fitted. Fitting data may comprise hearing loss parameters, compressor parameters, filter coefficients, and/or gain coefficients. Hearing device operation parameters may comprise volume control parameters, mode and/or program control parameters. Firmware may refer to a computer program provided by the hearing device manufacturer, and to be installed on the hearing device 2 to control the hearing device 2. Firmware is for example to be installed to upgrade the operations and capabilities of the hearing device 2. The client device 10 may transmit an authentication message 424 comprising a session key 188 to the fitting device 14. The session key may be used for secure data communication 430 with the hearing device 2

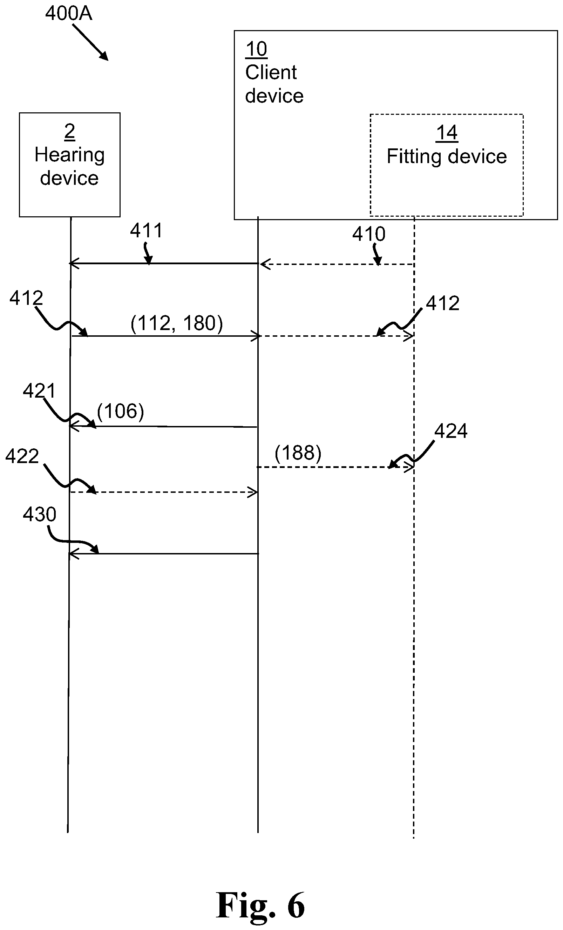

Fig. 6 schematically illustrates an exemplary signalling diagram 400A where the client device certificate 106 is included in the authentication message 421.

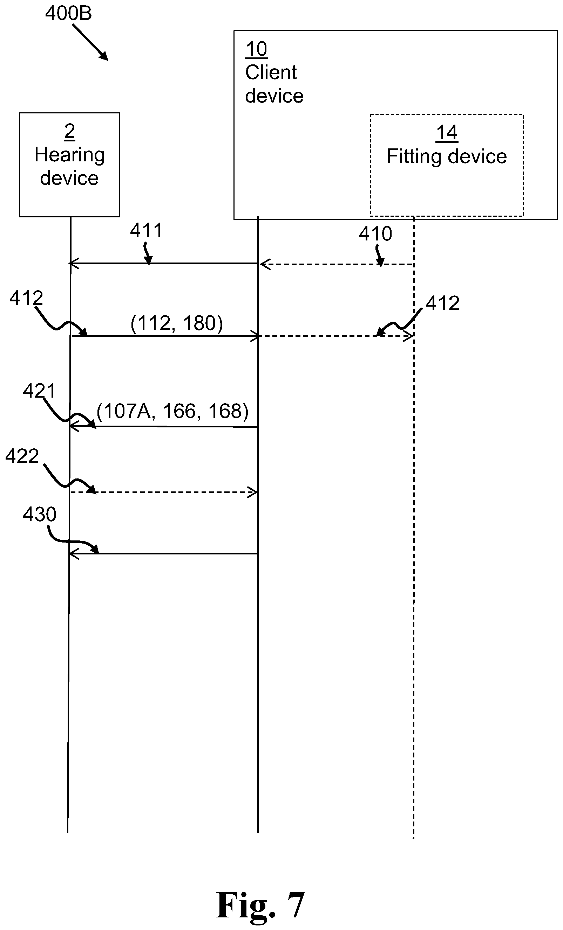

Fig. 7 schematically illustrates an exemplary signalling diagram 400B where the encrypted client device certificate 107A is included in the authentication message 421.

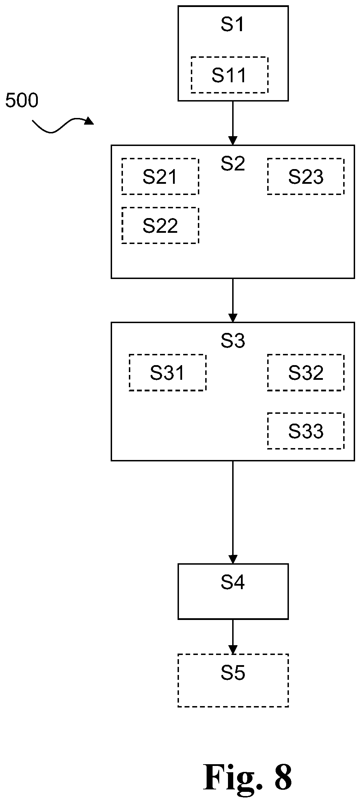

Fig. 8 schematically illustrates a flowchart of an exemplary method 500 of operating a client device for hearing device communication. The client device comprises a memory unit having a client device key and a client device certificate stored thereon. The method comprises receiving S1 a connection response comprising a hearing device identifier via the interface; generating S2 one or more keys including a certificate key based on the hearing device identifier and the client device key; obtaining S3 an authentication message based on the certificate key and the client device certificate; and transmitting S4 the authentication message via the interface. Obtaining S3 the authentication message comprises generating S31 an encrypted client device certificate by encrypting the client device certificate with the certificate key and including the encrypted client device certificate in the authentication message. The method 500 comprises obtaining S11 a session identifier as part of the connection response. Generating S2 one or more keys comprises generating S21 a hearing device key based on the hearing device identifier and the client device key, and generating S22 a common secret based on the hearing device key and the session identifier. The certificate key is based on the common secret and a certificate value. Generating S2 one or more keys optionally comprises generating S23 a session key based on the hearing device identifier, the session identifier and the client device key. The method may comprise transmitting S5 the session key to a fitting device. In the method 500, the session key is based on the common secret and a session value. Obtaining S3 the authentication message comprises including S32 an authentication key identifier indicative of the client device key in the authentication message and/or including S33 an authentication type identifier in the authentication message.

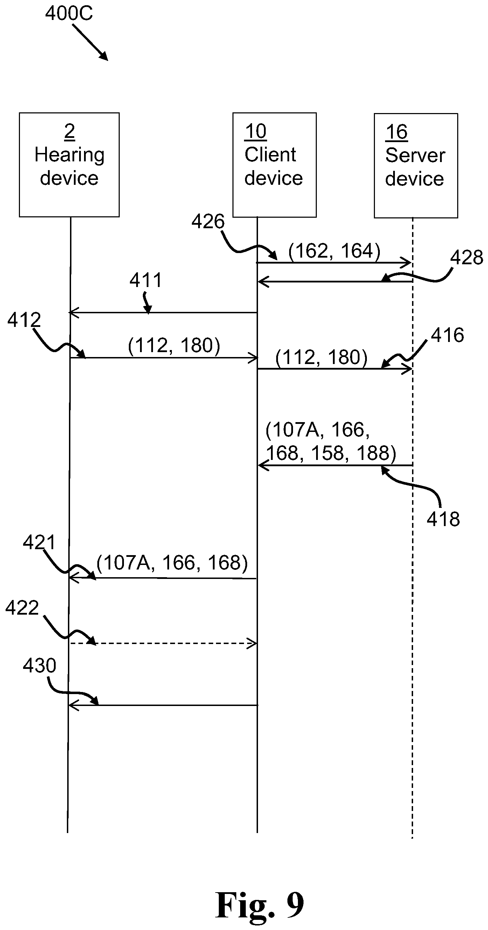

Fig. 9 schematically illustrates an exemplary signalling diagram 400C where obtaining the authentication message comprises obtaining an encrypted client device certificate from a server device. The client device 10 transmits a certificate request 416 to a server device 16. The certificate request 416 comprises the hearing device identifier 112 and the session identifier 180. The server device 16 obtains the client device certificate 107 from a memory unit thereof, calculates certificate key and session key based on the hearing device identifier 112 and the session identifier 180 and encrypts the client device certificate 107. The server device generates and transmits certificate response 418 to the client device 10. The certificate response 418 includes encrypted client device certificate 107A, authentication type identifier 168, authentication key identifier 166, client device identifier 158 and session key 188. The client device receives the certificate response 418 with the encrypted client device certificate 107A and includes the encrypted client device certificate in the authentication message. Thus, obtaining an encrypted client device certificate may comprise receiving a certificate response comprising the encrypted client device certificate from a server device. Optionally, the client device may, as illustrated in Fig. 9 be configured to perform a login procedure comprising transmitting a login request 426 comprising user identifier 162 and password 164. The server device 16 verifies the login request 426 and returns with login response 428 upon accept.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

The scope of protection is defined by the claims.

LIST OF REFERENCES

| | |
|---|---|
| 2 | hearing device |
| 4 | processing unit of client device |
| 6 | memory unit of client device |
| 8 | interface of client device |
| 10 | client device |
| 12 | manufacturing device |
| 14 | fitting device |
| 16 | server device |
| 21 | communication link between client device and hearing device |
| 22 | communication link between server device and manufacturing device |
| 23 | communication link between hearing device and manufacturing device |
| 24 | communication link between server device and client device/fitting device |
| 100 | hearing device certificate |
| 106, 107 | client device certificate |
| 106A, 107A | encrypted client device certificate |
| 112 | hearing device identifier |
| 113 | digital signature |
| 114 | first hearing device key identifier |
| 130 | certificate type identifier |
| 132 | version identifier |
| 134 | length identifier |
| 136 | signing device identifier |
| 148 | first hardware identifier |
| 150 | second hardware identifier |
| 156 | client device type identifier |
| 158 | client device identifier; |
| 159 | client device key identifier |
| 160 | bluetooth address |
| 162 | user identifier |
| 164 | password |
| 166 | authentication key identifier |
| 168 | authentication type identifier |
| 180 | session identifier |
| 182 | client device key |

| 188 | session key |
| 400, 400A, 400B, 400C | signalling diagram |
| 410, 411 | connection request |
| 412 | connection response |
| 416 | certificate request |
| 418 | certificate response |
| 421 | authentication message |
| 422 | authentication response |
| 424 | authentication message |
| 426 | login request |
| 428 | login response |
| 430 | hearing device data |

**Claims**

1. A client device (10) for hearing device communication, the client device (10) comprising

   - a processing unit;
   - a memory unit; and
   - an interface,

      the memory unit having a client device key (182) and a client device certificate (106, 107) stored thereon,
      **characterized in that:**
      the processing unit is configured to

   - receive a connection response (412) comprising a hearing device identifier (112) via the interface;
   - generate one or more keys based on the hearing device identifier (112) and the client device key (182);
   - obtain an authentication message (424) based on the one or more keys and the client device certificate (106, 107), and
   - transmit the authentication message (424) via the interface.

2. Client device according to claim 1, wherein the processing unit is configured to obtain a session identifier (180), and wherein to generate one or more keys comprises to generate a hearing device key based on the hearing device identifier (112) and the client device key (182), and to generate a common secret based on the hearing device key and the session identifier (180).

3. Client device according to any of the previous claims, wherein the one or more keys include a certificate key, and wherein the authentication message is obtained based on the certificate key and the client device certificate.

4. Client device according to any of claim 2-3, wherein the certificate key is based on the common secret and a certificate value.

5. Client device according to any of claims 2-4, wherein to generate one or more keys comprises to generate a session key (188) based on the hearing device identifier (112), the session identifier (180) and the client device key (182), and wherein the processing unit is configured to transmit the session key (188) to a fitting device (14).

6. Client device according to claim 5, wherein the session key (188) is based on the common secret and a session value.

7. Client device according to any of the preceding claims, wherein the processing unit is configured to include an authentication key identifier (166) indicative of the client device key (182) in the authentication message (424).

8. Client device according to any of the preceding claims, wherein the processing unit is configured to include an authentication type identifier (168) in the authentication message (424).

9. Client device according to any of the preceding claims, wherein the client device certificate (106, 107) comprises one or more of:

      - a certificate type identifier (130);

- a signing device identifier (136) ;
- a client device type identifier (156);
- a client device identifier (158);
- a client device key identifier (159);
- one or more hardware identifiers (148); and
- a digital signature (113).

10. Method of operating a client device for hearing device communication, the client device comprising a memory unit having a client device key (182) and a client device certificate (106, 107) stored thereon, **characterized in that** the method comprises:

- receiving a connection response (412) comprising a hearing device identifier (112) via the interface;
- generating one or more keys based on the hearing device identifier (112) and the client device key (182);
- obtaining an authentication message (424) based the one or more keys and the client device certificate (106, 107), and
- transmitting the authentication message (424) via the interface.

11. Method according to claim 10, the method comprising obtaining a session identifier (180), and wherein generating one or more keys comprises generating a hearing device key based on the hearing device identifier (112) and the client device key (182), and generating a common secret based on the hearing device key and the session identifier (180).

12. Method according to any of claims 10-11, wherein the one or more keys include a certificate key, and wherein obtaining the authentication message (424) based on the client device certificate comprises obtaining the authentication message (424) based on the certificate key and the client device certificate.

13. Method according to any of claims 10-12, wherein the certificate key is based on the common secret and a certificate value.

14. Method according to any of claims 9-13, wherein generating one or more keys comprises generating a session key (188) based on the hearing device identifier (112), the session identifier (180) and the client device key (182), and wherein the method comprises transmitting the session key (188) to a fitting device (14).

15. Method according to claim 14, wherein the session key (188) is based on the common secret and a session value.

**Patentansprüche**

1. Ein Client-Gerät (10) zur Hörgerätekommunikation, wobei das Client-Gerät (10) Folgendes umfasst:

- eine Verarbeitungseinheit;
- eine Speichereinheit; Geist
- eine Schnittstelle,

wobei in der Speichereinheit ein Client-Geräteschlüssel (182) und ein Client-Gerätezertifikat (106, 107) gespeichert sind,
**dadurch gekennzeichnet, dass**:
Die Verarbeitungseinheit ist dazu konfiguriert

- Empfangen einer Verbindungsantwort (412), die eine Hörgerätekennung (112) umfasst, über die Schnittstelle;
- Erzeugen eines oder mehrerer Schlüssel basierend auf der Hörgerätekennung (112) und dem Client-Geräteschlüssel (182);
- Erhalten einer Authentifizierungsnachricht (424) basierend auf dem einen oder den mehreren Schlüsseln und dem Client-Gerätezertifikat (106, 107) und
- Übertragen der Authentifizierungsnachricht (424) über die Schnittstelle.

2. Client-Gerät nach Anspruch 1, wobei die Verarbeitungseinheit dazu konfiguriert ist, eine Sitzungskennung (180) zu erhalten, und wobei das Erzeugen eines oder mehrerer Schlüssel das Erzeugen eines Hörgeräteschlüssels basierend auf der Hörgerätekennung (112) und dem umfasst Client-Geräteschlüssel (182) und ein gemeinsames Geheimnis basierend auf dem Hörgeräteschlüssel und der Sitzungskennung (180) zu generieren.

3. Client-Gerät nach einem der vorherigen Ansprüche, wobei der eine oder die mehreren Schlüssel einen Zertifikatsschlüssel umfassen und wobei die Authentifizierungsnachricht auf der Grundlage des Zertifikatsschlüssels und des Client-Gerätezertifikats erhalten wird.

4. Client-Gerät nach einem der Ansprüche 2-3, wobei der Zertifikatsschlüssel auf dem gemeinsamen Geheimnis und einem Zertifikatswert basiert.

5. Client-Gerät nach einem der Ansprüche 2-4, wobei das Erzeugen eines oder mehrerer Schlüssel das Erzeugen eines Sitzungsschlüssels (188) basierend auf der Hörgerätekennung (112), der Sitzungskennung (180) und dem Client-Geräteschlüssel umfasst (182), und wobei die Verarbeitungseinheit dazu konfiguriert ist, den Sitzungsschlüssel (188) an ein Anpassungsgerät (14) zu übertragen.

6. Client-Gerät nach Anspruch 5, wobei der Sitzungsschlüssel (188) auf dem gemeinsamen Geheimnis und einem Sitzungswert basiert.

7. Client-Gerät nach einem der vorhergehenden Ansprüche, wobei die Verarbeitungseinheit so konfiguriert ist, dass sie eine Authentifizierungsschlüsselkennung (166), die den Client-Geräteschlüssel (182) anzeigt, in die Authentifizierungsnachricht (424) einbezieht.

8. Client-Gerät nach einem der vorhergehenden Ansprüche, wobei die Verarbeitungseinheit so konfiguriert ist, dass sie eine Authentifizierungstypkennung (168) in die Authentifizierungsnachricht (424) einbezieht.

9. Client-Gerät nach einem der vorhergehenden Ansprüche, wobei das Client-Gerät-Zertifikat (106, 107) eines oder mehrere der folgenden umfasst:

   - eine Zertifikatstypkennung (130);
   - eine Signiergerätekennung (136);
   - eine Client-Gerätetypkennung (156);
   - eine Client-Gerätekennung (158);
   - eine Client-Geräteschlüsselkennung (159);
   - eine oder mehrere Hardware-Kennungen (148); Geist
   - eine digitale Signatur (113).

10. Verfahren zum Betreiben eines Client-Geräts zur Hörgerätekommunikation, wobei das Client-Gerät eine Speichereinheit mit einem Client-Geräteschlüssel (182) und einem darin gespeicherten Client-Gerätezertifikat (106, 107) umfasst, **dadurch gekennzeichnet, dass** das Verfahren Folgendes umfasst:

   - Empfangen einer Verbindungsantwort (412), die eine Hörgerätekennung (112) umfasst, über die Schnittstelle;
   - Erzeugen eines oder mehrerer Schlüssel basierend auf der Hörgerätekennung (112) und dem Client-Geräteschlüssel (182);
   - Erhalten einer Authentifizierungsnachricht (424) basierend auf dem einen oder den mehreren Schlüsseln und dem Client-Gerätezertifikat (106, 107) und
   - Übertragen der Authentifizierungsnachricht (424) über die Schnittstelle.

11. Verfahren nach Anspruch 10, wobei das Verfahren das Erhalten einer Sitzungskennung (180) umfasst und wobei das Erzeugen eines oder mehrerer Schlüssel das Erzeugen eines Hörgeräteschlüssels basierend auf der Hörgerätekennung (112) und dem Client-Geräteschlüssel (182) umfasst und Erzeugen eines gemeinsamen Geheimnisses basierend auf dem Hörgeräteschlüssel und der Sitzungskennung (180).

12. Verfahren nach einem der Ansprüche 10-11, wobei der eine oder die mehreren Schlüssel einen Zertifikatsschlüssel umfassen und wobei das Erhalten der Authentifizierungsnachricht (424) basierend auf dem Client-Gerätezertifikat das Erhalten der Authentifizierungsnachricht (424) basierend auf dem Zertifikat umfasst Schlüssel und das Client-Gerätezertifikat.

13. Verfahren nach einem der Ansprüche 10-12, wobei der Zertifikatsschlüssel auf dem gemeinsamen Geheimnis und einem Zertifikatswert basiert.

**14.** Verfahren nach einem der Ansprüche 9-13, wobei das Erzeugen eines oder mehrerer Schlüssel das Erzeugen eines Sitzungsschlüssels (188) basierend auf der Hörgerätekennung (112), der Sitzungskennung (180) und dem Client-Geräteschlüssel (182) umfasst, und wobei das Verfahren das Übertragen des Sitzungsschlüssels (188) an ein Anpassungsgerät (14) umfasst.

**15.** Verfahren nach Anspruch 14, wobei der Sitzungsschlüssel (188) auf dem gemeinsamen Geheimnis und einem Sitzungswert basiert.


**Revendications**

**1.** Dispositif client (10) pour communication avec un appareil auditif, le dispositif client (10) comprenant

- une unité de traitement ;
- une unité mémoire ; esprit
- une interface,

l'unité de mémoire ayant une clé de dispositif client (182) et un certificat de dispositif client (106, 107) stockés dessus,
**caractérisé en ce que** :
l'unité de traitement est configurée pour

- recevoir une réponse de connexion (412) comprenant un identifiant de dispositif auditif (112) via l'interface ;
- générer une ou plusieurs clés sur la base de l'identifiant de dispositif auditif (112) et de la clé de dispositif client (182) ;
- obtenir un message d'authentification (424) basé sur la ou les clés et le certificat de dispositif client (106, 107), et
- transmettre le message d'authentification (424) via l'interface.

**2.** Dispositif client selon la revendication 1, dans lequel l'unité de traitement est configurée pour obtenir un identifiant de session (180), et dans lequel générer une ou plusieurs clés comprend la génération d'une clé d'appareil auditif sur la base de l'identifiant d'appareil auditif (112) et du clé de dispositif client (182), et générer un secret commun sur la base de la clé de dispositif auditif et de l'identifiant de session (180).

**3.** Dispositif client selon l'une quelconque des revendications précédentes, dans lequel la ou les clés incluent une clé de certificat, et dans lequel le message d'authentification est obtenu sur la base de la clé de certificat et du certificat du dispositif client.

**4.** Dispositif client selon l'une quelconque des revendications 2 et 3, dans lequel la clé de certificat est basée sur le secret commun et une valeur de certificat.

**5.** Dispositif client selon l'une quelconque des revendications 2 à 4, dans lequel générer une ou plusieurs clés comprend la génération d'une clé de session (188) sur la base de l'identifiant du dispositif auditif (112), de l'identifiant de session (180) et de la clé du dispositif client (182), et dans lequel l'unité de traitement est configurée pour transmettre la clé de session (188) à un dispositif d'adaptation (14).

**6.** Dispositif client selon la revendication 5, dans lequel la clé de session (188) est basée sur le secret commun et une valeur de session.

**7.** Dispositif client selon l'une quelconque des revendications précédentes, dans lequel l'unité de traitement est configurée pour inclure un identifiant de clé d'authentification (166) indicatif de la clé du dispositif client (182) dans le message d'authentification (424).

**8.** Dispositif client selon l'une quelconque des revendications précédentes, dans lequel l'unité de traitement est configurée pour inclure un identifiant de type d'authentification (168) dans le message d'authentification (424).

**9.** Dispositif client selon l'une quelconque des revendications précédentes, dans lequel le certificat de dispositif client (106, 107) comprend un ou plusieurs des éléments suivants :

- un identifiant de type de certificat (130) ;
- un identifiant de dispositif signataire (136) ;
- un identifiant de type de dispositif client (156) ;
- un identifiant de dispositif client (158) ;
- un identifiant de clé de dispositif client (159) ;
- un ou plusieurs identifiants matériels (148) ; esprit
- une signature numérique (113).

10. Procédé de fonctionnement d'un dispositif client pour la communication d'un appareil auditif, le dispositif client comprenant une unité de mémoire dans laquelle est stockée une clé de dispositif client (182) et un certificat de dispositif client (106, 107), **caractérisé en ce que** le procédé comprend :

- recevoir une réponse de connexion (412) comprenant un identifiant de dispositif auditif (112) via l'interface ;
- générer une ou plusieurs clés sur la base de l'identifiant de dispositif auditif (112) et de la clé de dispositif client (182) ;
- obtenir un message d'authentification (424) sur la base de la ou des clés et du certificat de dispositif client (106, 107), et
- transmettre le message d'authentification (424) via l'interface.

11. Procédé selon la revendication 10, le procédé comprenant l'obtention d'un identifiant de session (180), et dans lequel la génération d'une ou plusieurs clés comprend la génération d'une clé d'appareil auditif basée sur l'identifiant d'appareil auditif (112) et la clé d'appareil client (182), et générer un secret commun sur la base de la clé du dispositif auditif et de l'identifiant de session (180).

12. Procédé selon l'une quelconque des revendications 10 à 11, dans lequel la ou les clés incluent une clé de certificat, et dans lequel l'obtention du message d'authentification (424) basé sur le certificat du dispositif client comprend l'obtention du message d'authentification (424) basé sur le clé de certificat et le certificat du périphérique client.

13. Procédé selon l'une quelconque des revendications 10 à 12, dans lequel la clé de certificat est basée sur le secret commun et une valeur de certificat.

14. Procédé selon l'une quelconque des revendications 9 à 13, dans lequel la génération d'une ou plusieurs clés comprend la génération d'une clé de session (188) basée sur l'identifiant de dispositif auditif (112), l'identifiant de session (180) et la clé de dispositif client (182), et dans lequel le procédé comprend la transmission de la clé de session (188) à un dispositif d'adaptation (14).

15. Procédé selon la revendication 14, dans lequel la clé de session (188) est basée sur le secret commun et une valeur de session.

1

**10**
Client device

**14**
Fitting device

24

**16**
Server
device

22

**21**

**12**
Manufacturing
device

23

**2**
Hearing Device

**100**

**Fig. 1**

10

4
Processing Unit

6
Memory unit

182

106, 107

8
Interface

**Fig. 2**

106

| 130 |
|---|
| 132 |
| 134 |
| 136 |
| 156 |
| 158 |
| 159 |
| 148 |
| 150 |
| 160 |
| 113 |

# Fig. 3

107

| 130 |
|:---:|
| 132 |
| 134 |
| 136 |
| 156 |
| 158 |
| 159 |
| 162 |
| 113 |

# Fig. 4

**Fig. 5**

**Fig. 6**

400B

| | |
|---|---|
| | **10**<br>Client<br>device |
| **2**<br>Hearing<br>device | **14**<br>Fitting device |

411

410

412

412

(112, 180)

421

(107A, 166, 168)

422

430

# Fig. 7

**Fig. 8**

400C

Fig. 9

**REFERENCES CITED IN THE DESCRIPTION**

**Patent documents cited in the description**

- US 2014211973 A1